# EUROPEAN PATENT SPECIFICATION

(11) **EP 1 533 697 B1**
(45) Date of publication and mention of the grant of the patent: **26.08.2015**
(21) Application number: 04023448.6
(22) Date of filing: 01.10.2004
(51) Int. Cl.: G06F 9/445

(54) **Systems and methods for external service administration**
Systeme und Verfahren zur externen Dienstverwaltung
Systèmes et méthodes pour l'administration externe de service

(30) Priority: 01.10.2003 EP 03022045
(43) Date of publication of application: 25.05.2005
(73) Proprietor: SAP SE, 69190 Walldorf (DE)
(72) Inventor: Salomon, Thomas, 69231 Rauenberg (DE); Ambrosch, Wolfgang, 88045 Friedrichshafen (DE); Mitic, Kristian, 88213 Ravensburg (DE)
(74) Representative: Müller-Boré & Partner Patentanwälte PartG mbB

(56) References cited:
- EP-A- 1 087 293
- FR-A1- 2 825 165
- LINTHICUM, DAVID S: "B2B APPLICATION INTEGRATION" 1 August 2001 (2001-08-01), ADDISON-WESLEY , USA , XP002315281 * page 349 - page 357 *
- BRITTON, CHRIS: "IT Architectures and Middleware" 1 April 2001 (2001-04-01), ADDISON-WESLEY , USA , XP002315282 * page 23 - page 24 *
- OTTO T P: "SAPL - APL as client and server for SAP R2/R3 systems" APL '02 ARRAY PROCESSING LANGUAGES, LORE, PROBLEMS, AND APPLICATIONS, 22 July 2002 (2002-07-22), XP009043194

## Description

### BACKGROUND

### Field of the Invention

The present invention generally relates to systems and methods for externally administrating local services, such as Windows-based services. The external administration may be performed with at least one centrally installed service administration program, or with local computers and a central computer. The invention also relates to computer programs and computer program products for externally administrating local services, such as Windows-based services. Moreover, the invention relates to displays for showing the external administration of local services.

### Background Information

EP 1 087 293 A2 relates to a computer system including a plurality of computers (2a, 2b,..., 2n), a management console (4) operated by the operator to install a program in the computers and a storage subsystem (1) coupled to the computers and the management console is disclosed. The storage subsystem includes a first storage unit shared by the computers and a plurality of second storage units exclusively used by the computers respectively. The first storage unit has stored therein a file related to the program installed in the computers and an installer program for executing the work of installing a program. The second storage units have each stored therein an install agent executed by each computer and a control file accessed by the install agent. The management console includes an install manager (431) for starting the execution of the install agent on each computer; The install manager starts the process according to the install agent on each computer by switching on the power supply of each computer. The install agent, once the process thereof is started, starts the installer program in accordance with the contents of the control file. The installer program reads a related file from the first storage unit, and transfers it to the second storage unit exclusive to the corresponding computer thereby to install the program.

In common applications, such as Environment, Health and Safety (EH&S) within a SAP R/3 system, services like Word for Windows Integrator (WWI), Ehsstart.exe and EXPERT services are installed as Windows-based services, running on local computers. These services are defined by a program ID and may register as a server within an external R/3 application program.

The WWI service provides integrating templates into Word for Windows, and these templates are filled with actual production data. This service also provides printing labels according to the templates and production data. The WWI service has to be installed locally, as Microsoft Word requires a local installation for using its functionality.

Besides the services WWI and EXPERT, the service Ehsstart.exe may run on each computer locally. This service monitors the WWI and EXPERT services. In case of malfunction of these services, the Ehsstart.exe services may restart the respective services, automatically.

As the services previously described are installed on local computers, they have to be administrated locally on the respective computers. A remote access to the services is not possible using a single user interface. In particular, when using a central application, not running on a Windows platform, the administration of the local services is not possible. Integrating local administration into an Enterprise Resource Planning (ERP) system, such as SAP R/3, would allow faster and easier administration of the services.

Furthermore, a local installation effort might be reduced. A major drawback of current systems is that a system administrator has to configure, administrate and maintain all services running within Windows computers locally, and manually. The system administrator cannot access these services from a central computer which, for instance, runs on a different operating system.

### SUMMARY OF THE INVENTION

Embodiments consistent with present invention may provide for the installation of services on computers. In one embodiment, a service management program administrating the services locally is installed on the computers, respectively. A service administration program may communicate administration information using remote function call messages with the service management program to administrate the services, respectively. Further, the service administration program may provide a single graphical user interface to administrate the local services through the service management program.

By providing a local service management program, configured to receive and send remote function calls, the local services may be administrated through a single service management program. The service management program might also run as a service on the local computers. The local service management program service may be set to start automatically, so that it runs as soon as the operating system is booted. The service management program may communicate with the service administration program using remote function calls. The remote function call messages may be from a set of pre-defined messages of an SAP R/3 system or may be defined according to the needs of administration. The central service administration program may, for instance, run on an SAP R/3 system. By using remote function call messages, commands may be received by the service management program from the central administration program, functions may be executed accordingly, and a status of the services or the result of the functions may be sent back to the central administration program. To allow a plurality of administration and maintenance functions, the remote function call (RFC) messages may be extended by additional messages, which are designed for functions, as further set out below.

To allow easy administration of the service management programs and, thus, administration of the local services, embodiments of the invention may provide for the use of a single graphical user interface, through which the services may be administrated. A user may select certain services within the graphical user interface and then check their functionality or administrate their parameters.

To provide unified messaging, embodiments of the invention may enable communication between the service administration program and the service management program by transmitting remote function call messages through a single communication gateway. A user interface may be implemented within R/3 and enable communication with external services, such as WWI and EXPERT, via a single communication gateway. The remote function call messages may be understood as a message format as known by certain SAP products. The usual RFC messages may be extended by additional RFC messages to support the inventive functions disclosed herein.

To allow identification of different service management programs within the service administration program and the graphical user interface, embodiments of the invention may provide for registering the service management program at the communication gateway using a program ID, identifying the service management program within the single graphical user interface and using the program ID by the service administration program. The program ID may be a unique identifier for each service management program. By using this unique identifier, a service management program may be identified within the single graphical user interface. This identifier may enable communicating with a particular service management program in case more than one service management program is registered and available through the single graphical user interface.

Each external computer may comprise only one service management program. Via remote function call parameters and program IDs, this service management program may be registered at the service administration program using its program ID. Communication with these service management programs may then be carried out using this program ID.

The single communication gateway provides communication with the service management program for a plurality of service administration programs connected with the communication gateway. It is possible to communicate with a plurality of service management programs, which reside on different external computers, using one single gateway. Also, a plurality of service administration programs may access one service management program, enabling administration from various different systems.

The single communication gateway may provide access to a plurality of service management programs, respectively, from one service administrating program and one graphical user interface. For instance, WWI and EXPERT services running on, for instance, client computers might both be administrated at the same time using one single gateway and one single administration program within an SAP R/3 system.

To allow for the registration of a service management program on various SAP R/3 systems, which each comprise service administration programs, each service management program may provide its remote function call (RFC) parameters to the respective service administration program. Further, each service management program may store information about a service administration program in a file, such as saprfc.ini. Each service management program may change their service configuration according to the service administration program destination retrieved from the service administration program by RFC parameters and initiate the creation of a new program thread of a service management program for each service administration program, respectively.

The service management program may run in multiple threads, each thread communicating with a different service administration program through the remote function calls. TCP/IP destinations may be established and a port on the communication gateway is provided for communicating with the respective service management program.

To avoid interference of different service administration programs administrating local services through a single service management program at one time, embodiments of the invention may provide for the synchronization of the service management threads so that messages from different service administration programs do not interfere during administration of the services.

To allow administrating certain services within the local computers, the service management program may provide a list of services installed on the local computers to the service administration program and the services may be presented and administrated through the single graphical user interface. This list may be used to access the respective service on the respective computer. ) As more than one service may be installed locally, these services might have to be administrated independently. The list may provide a unique identifier for each service, by which this service may be addressed.

To allow installing and de-installing, or starting and stopping certain services, the service administration program may send install, or start/stop messages to the service management program to install and/or de-install, start, and/or stop the services locally.

In accordance with yet another embodiment, services within a Windows operating system may generate service control messages informing about their status, warnings, and errors. To get centrally knowledge of this information, the service management program may send service control messages comprising service control information of the services to the service administration program, and the service administration program may present the service control information through the single graphical user interface. The service administrator, thus, may receive knowledge centrally about the status of the local services. The service may then be administrated according to the present status.

Another embodiment may provide for dividing the service control information into one or more categories, such as service status information, service warning information and/or service error information. The service control information may be presented through a single graphical user interface in a different way according to its category.

To allow for the configuring of services, which may be configured by service configuration parameters, the service management program may send service configuration parameter messages comprising configuration parameters of the services to the service administration program, and the service administration program may present the configuration parameters through the single graphical user interface. The present configuration of a service may be monitored centrally.

To allow for monitoring and configuring one or more configuration parameters, the service administration program may store the configuration parameters and enable editing of the services with the configuration parameters through a single graphical user interface. The service parameters, once edited, may then be sent to one or more respective service management programs, which edit the service configuration parameters locally and administrate the respective services.

To get central knowledge about the usage of each service from the central computer, the service management program may send service statistic messages comprising statistics of the services to the service administration program, and the service administration program may present the statistics through the single graphical user interface.

Consistent with another embodiment of the invention, the statistics may comprise information about, for example, a number of accesses to the services, operating hours of the services, and idle times of the services. From the knowledge about idle times and busy times of the services, the workload of the services may be calculated.

To enable installation and administration of services from an external computer using the service management programs, the service management program may be provided with local administration rights for local service administration. By providing the service management program with administration rights, the program may install, de-install and configure services and their parameters locally. The operating system allows these changes to its files only, in case the service management program has administration rights.

During the installation of the service management program locally, a local operation account of the service management program may be acquired and the local operating account may be provided with administration rights for local service administration. According to this embodiment, the service management program may also be provided with administration rights.

There may be further provided a computer system comprising a central administration computer and a local service computer operating services locally, in particular Windows-based services, the local computer comprises service means operating the services, the local computer comprises management means operating a service management to administrate the services locally, respectively, the central computer comprises administration means operating the service administration and communicating administration information with the service means to administrate the services, respectively, and the central computer comprises display means displaying a single graphical user interface to administrate the local services through the service means.

There may be further provided a computer program for externally administrating local services, in particular Windows-based services, with at least one centrally installed service administration program with instructions operable to cause a processor to install the services on computers, administrate the services locally with a service management program installed on the computers, respectively, communicate administration information between the service administration program and the service management program to administrate the services, respectively and provide a single graphical user interface within the service administration program to administrate the local services through the service management program graphically.

There may be further provided a computer program product for externally administrating local services, in particular Windows-based services, with at least one centrally installed service administration program with a computer program stored thereon with instructions operable to cause a processor to install the services on computers, administrate the services locally with a service management program installed on the computers, respectively, communicate administration information between the service administration program and the service management program to administrate the services, respectively and provide a single graphical user interface within the service administration program to administrate the local services through the service management program graphically.

There may be further provided a display for showing external administration of local services, in particular Windows-based services, on at least one centrally installed service administration program. The display may show administration information to administrated local services through service management programs with locally installed services using a service management program administrating the services locally. The service administration program may communicate administration information with the service management program to administrate the services, respectively.

The features of the dependent claims 2 to 12 an as well be structurally or methodically incorporated in a system, a computer program product and a display according to embodiments.

Additional objects and advantages of the invention will be set forth in part in the description which follows, and in part will be obvious from the description, or may be learned by practice of the invention. The objects and advantages of the invention will be realized and attained by means of the elements and combinations particularly pointed out in the appended claims.

It is to be understood that both the foregoing general description and the following detailed description are exemplary and explanatory only and are not restrictive of the invention, as claimed. Other embodiments and features may be provided within the scope of the present invention.

### BRIEF DESCRIPTION OF THE DRAWINGS

Referring now to the drawings, in which like numerals represent like elements throughout the several figures, aspects of the present invention and the exemplary operating environment will be described. In the drawings show:
FIG. 1 illustrates an exemplary computer system, consistent with an embodiment of the present invention;
FIG. 2 illustrates an exemplary system with administration computer and service computers, consistent with an embodiment of the present invention;
FIG. 3 illustrates a flowchart of an exemplary method, consistent with an embodiment of the present invention;
FIG. 4 illustrates a first screenshot of an exemplary program, consistent with an embodiment of the present invention;
FIG. 5 illustrates a second screenshot of an exemplary program, consistent with an embodiment of the present invention;
FIG. 6 illustrates a third screenshot of an exemplary program, consistent with an embodiment of the present invention; and
FIG. 7 illustrates a fourth screenshot of an exemplary program, consistent with an embodiment of the present invention.

### DESCRIPTION OF THE EMBODIMENTS

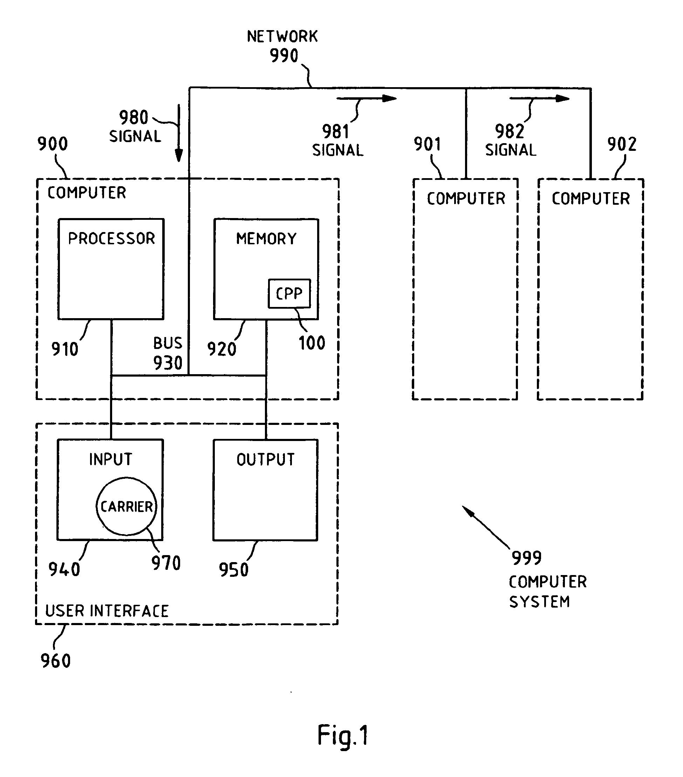

FIG. 1 illustrates a simplified block diagram of exemplary computer system 999 having a plurality of computers 900, 901, 902 (or even more).

Computer 900 can communicate with computers 901 and 902 over network 990. Computer 900 includes processor 910, memory 920, bus 930, and, optionally, input device 940 and output device 950 (I/O devices, user interface 960). As illustrated, embodiments of the invention may be implemented by computer program product 100 (CPP), carrier 970 and/or signal 980.

With respect to computer 900, computer 901/902 may be referred to as a "remote computer." Computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 may comprise elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 may be physically implemented by computer-readable media, for example: (a) magnetic media, like a hard disk, a floppy disk, or other magnetic disk, a tape, a cassette tape; (b) optical media, like optical disk (CD-ROM, digital versatile disk (DVD), etc.); and (c) semiconductor media, like DRAM, SRAM, EPROM, EEPROM, memory stick.

Optionally, memory 920 is distributed. Portions of memory 920 can be removable or non-removable. For reading from media and for writing in media, computer 900 may use well-known devices, for example, disk drives, or tape drives.

Memory 920 stores modules such as, for example, a basic input output system (BIOS), an operating system (OS), a program library, a compiler, an interpreter, and a text- processing tool. Modules are commercially available and can be installed on computer 900. For simplicity, these modules are not illustrated.

CPP 100 has program instructions and, optionally, data that cause processor 910 to execute method steps consistent with embodiments of the present invention. In other words, CPP 100 can control the operation of computer 900 and its interaction in network system 999 so that is operates to perform in accordance with embodiments of the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

In Figure 1, carrier 970 is illustrated outside computer 900. For communicating CPP 100 to computer 900, carrier 970 may be conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods consistent with embodiments of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), etc.), speaker, printer, plotter, vibration alert device and the like. Output device 950 can communicate with the user, but it can also communicate with further computers.

Input device 940 and output device 950 can be combined to a single device. Further, device 940 and/or 950 can be provided optionally.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., World Wide Web ("WWW")). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides" are convenient abbreviation to express actions by a computer that is controlled by a program.

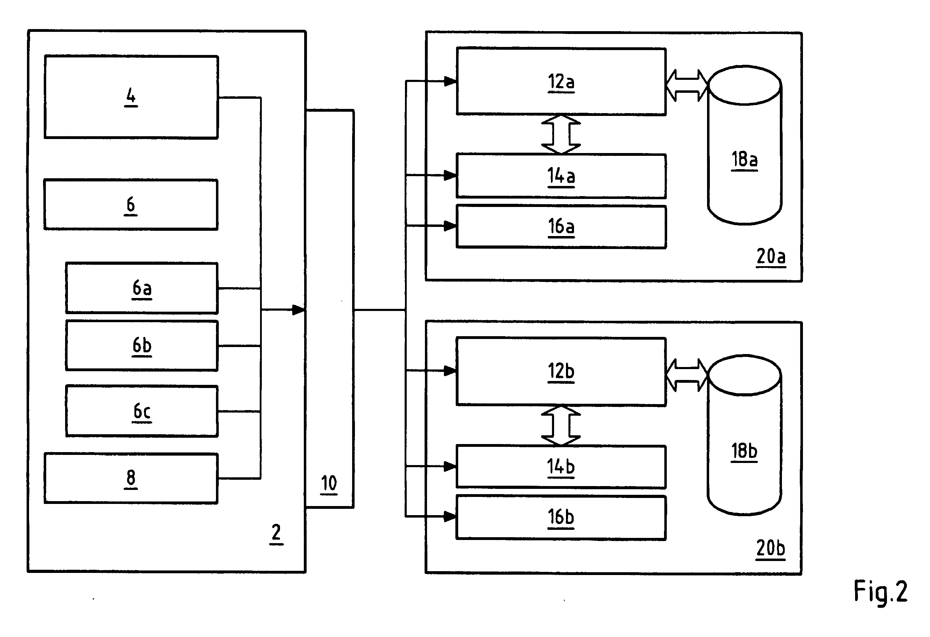

Figure 2 depicts an exemplary system, according to an embodiment of the invention. Depicted is an administration computer 2 and one or more service computers 20a, 20b (collectively "20").

The administration computer 2 may be a SAP R/3 server with an EH&S service running. The administration computer 2 may comprise a service administration program 4, a Word for Windows integrator dispatcher 6, one or more Word for Windows Integrator programs 6a-c, and a Word for Windows Integrator for WebGUI program 8.

The Word for Windows dispatcher 6, Word for Windows Integrator programs 6a-c, and Word for Windows Integrator for WebGUI program 8 may work according to the SAP EH&S program. They communicate with services running on local computers 20. Each of these local computers 20 may comprise Word for Windows Integrator services 14 and EXPERT services 16, which may communicate with the Word for Windows Integrator programs 6a-c to allow working according to the EH&S program.

Further depicted in Figure 2 is a remote function call gateway 10, service management programs 12 and databases 18.

The services 14, 16 may be installed on the service computes 20, locally. For each service 14, 16, a registry entry defines the service parameters. The service parameters may be used to administrate the services. The registry entries are stored in the databases 18. The databases 18 may store, for example, wwi.ini, saprfc.ini, temp files, event log files, rules, and/or registry files. As the services are installed locally, the administration is provided by a central administration program 4.

For centrally administrating the respective services, a remote function call gateway 10 provides a single interface for exchanging remote function call messages, which might be extended by new messages used for administration reasons.

The services 14, 16 run as Windows services. For administrating theses services 14, 16, a service management program 12 may also be locally installed on each computer, respectively. On each computer 20, only one service management program 12 may be installed. The service management program 12 is also installed as a Windows service and may be configured to start automatically after booting the operating system of the computer 20.

After booting and starting the service management program 12, this service management program 12 may register at the service administration program 4 using a remote function call messages and provide a unique program ID. The program ID is transmitted from the service management program 12 to the service administration program 4 via the remote function call gateway 10, providing a single interface for communication.

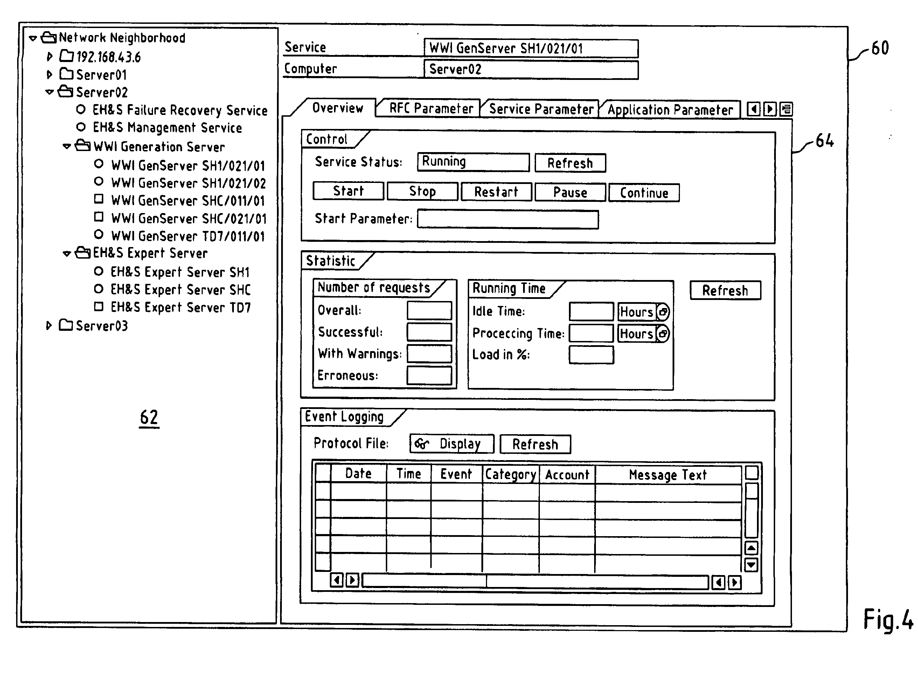

It can be seen from Figure 2 that more than one service management program 12 may register at the service administration program 4. The service administration program 4 provides administration of the respective service via a graphical user interface, examples of which are depicted and described below with reference to Figures 4-7.

In one embodiment, the service management program 12 transmits service control messages, service configuration messages, and service statistic messages to the service administration program 4 via the remote function gateway 10 using remote function call messages. According to user selections in the graphical user interface provided by the service administration program 4, service configuration parameters are transmitted to the respective service management program 12 via the remote function call gateway 10. Within the service management program 12, the service configuration parameters are used for configuring the respective services. This may be done by editing the registry entries of the services.

To identify the local services 14, 16 within the graphical user interface and to allow configuration of the services centrally, the service management program 12 transmits a list of locally available services to the service administration program 4 via the remote function call gateway 10. This list may allow for selecting a single service, acquiring the service configuration parameters and log file entries of this service centrally. It may further allow for editing the service configuration centrally and communicating the edited service configuration of the respective service.

To allow the configuration of the registry files and the services locally, the service management programs 12 may have local administration rights or the user account, under which the service management program 12 was installed on, is assigned administration rights.

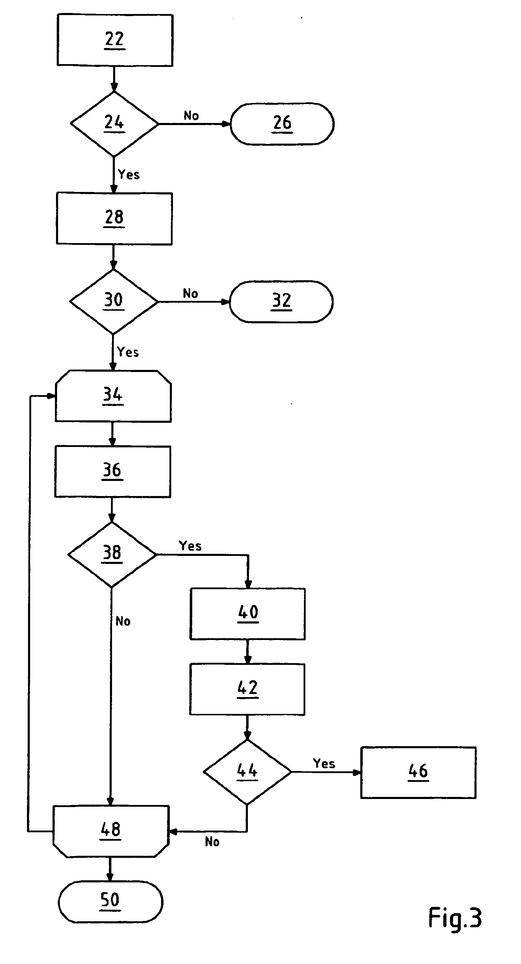

Figure 3 depicts a flowchart of an exemplary method that shows the acquisition of the program IDs for the service management programs 12 registered at the service administration program 4.

In step 22, all program IDs of all remote servers, which have registered at the gateway 10 are acquired. After that in step 24 it is checked, whether any servers are registered at the gateway 10. In case no programs are registered, an error message may be produced in step 26.

In step 28, the destination paths for the service management program corresponding to the program IDs are read from a database.

After the destination paths are read from the database, they are checked at step 30. This analysis may include checking whether the respective path is available and accessible. In case the path is invalid, an error message may be produced in step 32.

In step 34, each registered program ID is iteratively checked. First of all, in step 36, the respective program ID is checked and the destination of this program ID is acquired. In step 38, it is checked whether a destination for this program ID exists in the database. If yes, then in step 40 a list of exported functions of the actual destination is acquired by a remote function call to this destination and the availability of a certain function identifying a service management program is checked in step 42. In step 44, it is checked if the function is available. If yes, the function is executed in step 46 and the destination is registered as service management program 12 at the service administration program 4. In step 48 the iteration jumps back to step 34 if further program IDs are to be checked, and if all program IDs are checked, the iteration is stopped in step 50.

Figure 4 depicts a screenshot 60 of an exemplary graphical user interface, consistent with an embodiment of the invention. The graphical user interface may be generated and presented to a user by the service administration program 4. On the left side of the screen 62, a list of all registered service management programs (e.g., SERVER01, SERVER02, etc) is presented. For each service management program the available services to be administrated are presented. The user may select one of the available services and may see all service parameters and service functionality on the right hand 64 of the screen.

On the top of the screen of the example of Figure 4, the service computer and the selected service is shown. Below, the user may select between, for example, an overview, RFC parameters, service parameters and application parameters.

The overview, as depicted in Figure 4, shows service control parameters. These show the present status of the service, which may be refreshed by pressing a button. The service may be started, stopped, restarted, paused or continued by pressing the respective button. Also, start parameters may be given.

Below, service statistics are presented to the user. These statistics may be been sent from the service management program 12 to the service administration program 4 via the single remote function call gateway 10. The statistics comprise a number of service requests, and service running time. The statistics allow calculating the workload of the respective service.

Further, an event log file is presented in Figure 4. This log file may comprise all service control messages and other protocol messages specific to each service. The respective protocol messages may be presented to the user according to their category.

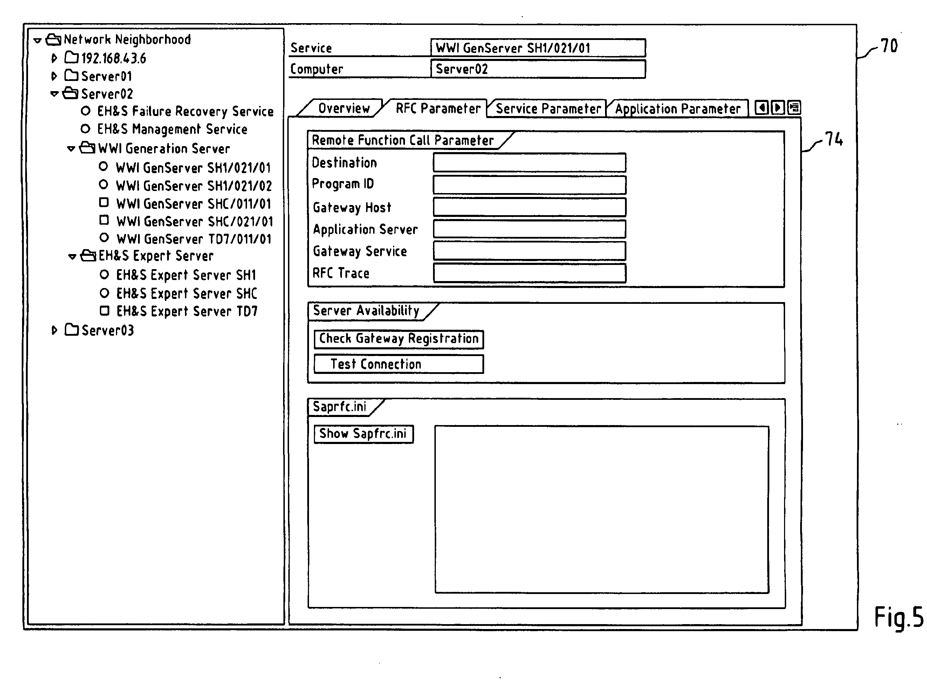

Figure 5 depicts a second screenshot 70 of an exemplary graphical user interface. The screenshot is similar to the one depicted in Figure 4.

As shown in the example of Figure 5, the right side 74 of the screen shows RFC parameter information. First, a list of basic RFC function parameters is shown. From this information, it can be seen to and from which server RFC messages may be sent, and which program ID the respective service management program has.

Below, the availability of the service management program on the respective computer may be checked. Also, the convection with this computer may be checked.

Finally, as illustrated in Figure 5, the RFC message configuration or the local computer may be presented and edited. The edited file may be sent to the local computer.

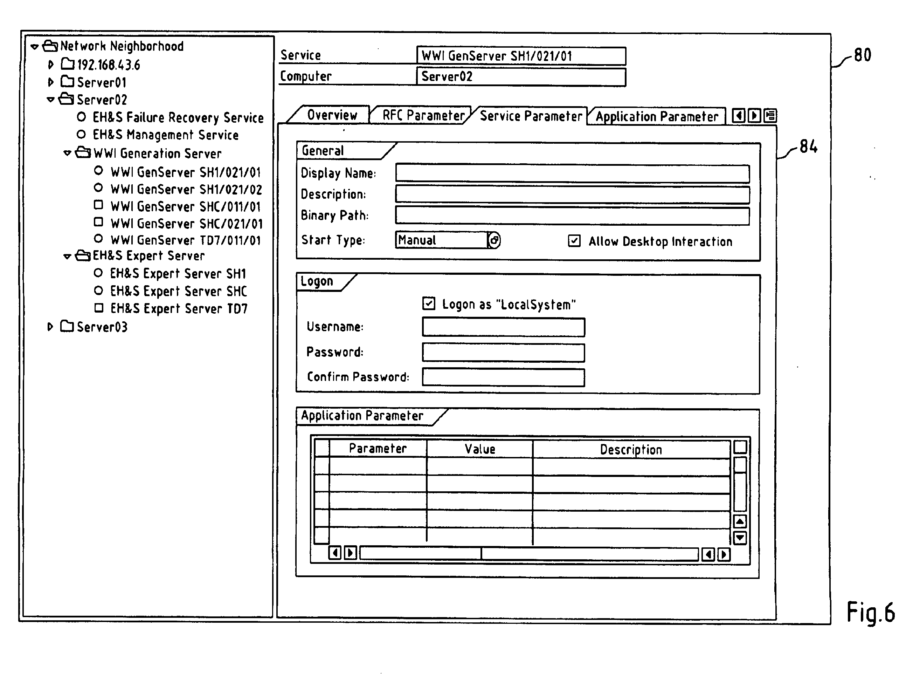

Figure 6 depicts another screenshot 80 of an exemplary graphical user interface, showing the screen when the information about service parameters is selected. On the right side of the screen 84, service parameter information, such as the service name, its description, its path, and its start type, is presented.

Below, login information may be presented. This might be useful if the local service management program does not have administration rights per se. In this case, the service management program may be provided with a user name and a password to attain administration rights on the local computer. Also, application parameters are presented.

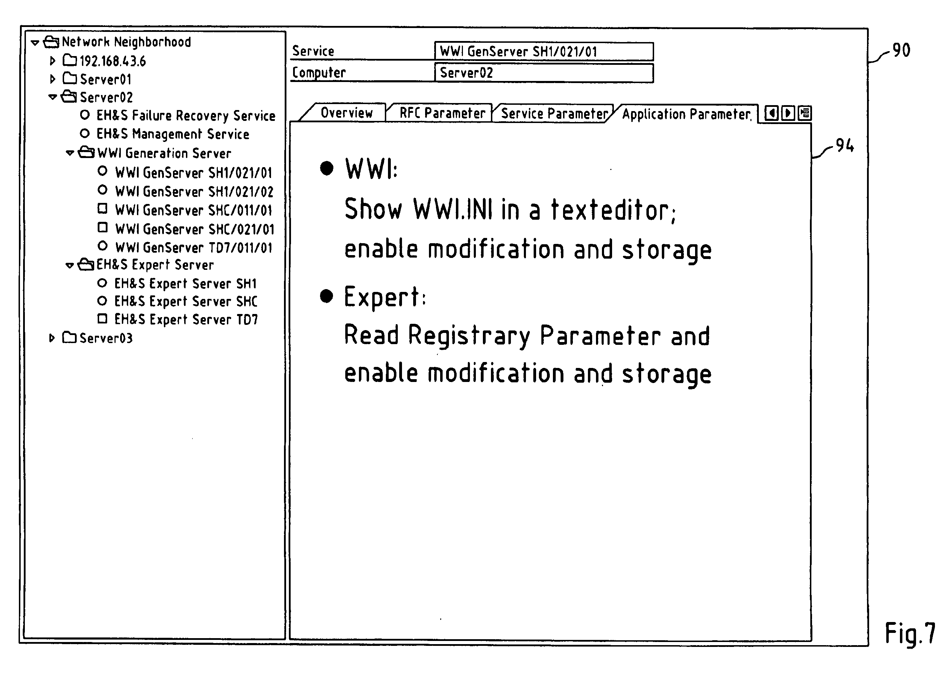

Figure 7 depicts an exemplary screenshot 90 showing application parameters. On the right side 94 of the exemplary graphical user interface, service parameters of the locally installed services may be presented and edited. The local registry entries and further service parameters are shown to the user. The user may edit these files and the edited files are sent to the local service management program, where the respective parameters are edited and thus the service administrated.

Other embodiments of the invention will be apparent to those skilled in the art from consideration of the specification and practice of the embodiments of the invention disclosed herein.

### REFERENCE NUMBERS

- 2: administration computer
- 4: service administration program
- 6: Word for Windows Integrator dispatcher
- 6a-c: Word for Windows Integrator program
- 8: Word for Windows Integrator for WebGUI program
- 10: remote function gateway
- 12: service management program
- 14: EXPERT service
- 16: Word for Windows Integrator service
- 22: check program IDs
- 24: program exist
- 26: error
- 28: read destination
- 30: check whether destination available
- 32: error
- 34: check Ids iteratively
- 36: search destination for program ID
- 38: destination found
- 40: acquire functions
- 42: check functions
- 44: function found
- 46: call function
- 48: check Ids
- 50: end
- 60,: 70, 80, 90 screen shot
- 62: available servers
- 64,: 74, 84, 94 service information
- 900: computer
- 910: processor
- 920: memory
- 930: bus
- 940: input device
- 950: output device
- 960: user interface
- 970: program carrier
- 980: program signal
- 999: computer network system

## Claims

1. A method for externally administrating local, Windows-based services (14, 16), with at least two centrally installed service administration programs (4), said local services (14, 16) being installed on one or more computers (20a, 20b), wherein the Windows-based services (14, 16) comprise Word for Windows Integrator (14), WWI, Ehsstart.exe and EXPERT (16) services, the method comprising:
installing a service management program (12) which administrates said local services (14, 16) locally on said computers (20a, 20b), respectively;
sending from each service administration program (4) administration information to said service management program (12) and receiving in each service administration program (4) administration information from said service management program (12) in order to administrate said local services (14, 16), respectively;
providing, through each service administration program (4), a single graphical user interface to administrate said local services (14, 16) through said service management program (12), respectively;
sending with said service management program (12), service configuration parameter messages comprising configuration parameters of said local services (14, 16) to each service administration program (4), and presenting said configuration parameters through said single graphical user interface, respectively;
storing with each service administration program (4) said configuration parameters and enabling editing said configuration parameters of said local services (14, 16) through said single graphical user interface, respectively;
sending edited configuration parameters from each service administration program (4) to said service management program (12) to administrate locally running services, respectively; and
providing, with said service management program (12), a list of local services (14, 16) installed on said local computers (20a, 20b) to each service administration program (4) and administering said local services (14, 16) through said single graphical user interface, respectively:
wherein each service administration program (4) communicates with said service management program (12) by transmitting remote function call messages through a single communication gateway (10);
running said service management program (12) in multiple threads, each thread communicating with a different service administration program (4) through said remote function calls;
wherein for each service administration program (4) an identifier is stored within the computer running the service management program (12), said identifier comprising service administration program (4) destinations retrieved by remote function call parameters from each service administration program (4), and said service management program (12) creating for each service administration program (4) a new thread, respectively;
wherein said service management threads are synchronized so that messages from different service administration programs (4) do not interfere during administration of said local services (14, 16).

2. The method of claim 1, wherein said service management program (12) registers at the said communication gateway (10) using a program ID and said service management program (12) is identified within said single graphical display and each service administration program (4) using said program ID, respectively.

3. The method of claim 1 or 2, wherein said single communication gateway (10) provides communication with said service management program (12) for each service administration program (4) connected with said communication gateway (10).

4. The method of any one of claims 1 to 3, wherein said single communication gateway (10) provides access to a plurality of service management programs (12), respectively, from each service administration program (4) and said graphical user interface, respectively.

5. The method of any one of claims 1 to 4, further comprising sending, with each service administration program (4), messages to said service management program (12) to install and/or de-install said local services (14, 16) locally.

6. The method of any one of claims 1 to 5, further comprising sending, with each service administration program (4), messages to said service management programs (12) to start and/or stop said local services (14, 16) locally.

7. The method of any one of claims 1 to 6, further comprising sending, with said service management program (12), service control messages comprising service control information of said local services (14, 16) to each service administration program (4) and presenting, with each service administration program (4), said service control information through said single graphical user interface, respectively.

8. The method of claim 7, further comprising dividing said service control information into a plurality of categories, including at least one of service status information, service warning information and service error information, and presenting said service control information through each single graphical user interface in a different way according to its category.

9. The method of any one of claims 1 to 8, further comprising sending, with said service management program (12), service statistic messages comprising statistics of said local services (14, 16) to each service administration program (4), and presenting said statistics through said single graphical user interface, respectively.

10. The method of claim 9, wherein said statistics comprise information about at least one of a number of accesses to said local services (14, 16), operating hours of said local services (14, 16), and idle times of said local services (14, 16).

11. The method of any one of claims 1 to 10, further comprising providing said service management program (12) with local administration rights for local service administration.

12. The method of any one of claims 1 to 11, further comprising acquiring, during installing said service management program (12) locally, a local operation account of said service management program (12), said local operating account being provided with administration rights for local service administration.

13. A computer system comprising at least two central administration computers (2) and a local service computer (20a, 20b) operating Windows-based services (14, 16) locally, wherein the Windows-based services (14, 16) comprise Word for Windows Integrator (14), WWI, Ehsstart.exe and EXPERT (16) services,
said local computer (20a, 20b) comprising service operating means for operating said local services (14, 16), service management means for operating a service management program (12) to administrate said local services (14, 16) locally and communication means to send administration information to each central administration computer (2),
each central administration computer (2) comprising service administration means for operating a service administration program (4) and communication means for communicating the administration information with said service administration means to administrate said local services (14, 16).
each central administration computer (2) further comprising display means for displaying a single graphical user interface to administrate said local services (14, 16) locally through said service management means;
sending with each service administration program (4), service configuration parameter messages comprising configuration parameters of said local services (14, 16) to each service administration program (4), and presenting said configuration parameters through said single graphical user interface, respectively, ;
storing with each service administration program (4) said configuration parameters and enabling editing said local services (14, 16) with said configuration parameters through said single graphical user interface, respectively;
sending edited configuration parameters from each service administration program (4) to said service management program (12) to administrate the locally running services, respectively; and
providing, with said service management program (12), a list of local services (14, 16) installed on said local computers (20a, 20b) to each service administration program (4) and administering said local services (14, 16) through said single graphical user interface, respectively;
wherein each service administration program (4) communicates with said service management program (12) by transmitting remote function call messages through a single communication gateway (10);
running said service management program (12) in multiple threads, each thread communicating with a different service administration program (4) through said remote function calls;
wherein for each service administration program (4) an identifier is stored within the computer running the service management program (12), said identifier comprising service administration program (4) destinations retrieved by remote function call parameters from each service administration program (4), and said service management program (12) creating for each service administration program (4) a new thread, respectively;
wherein said service management threads are synchronized so that messages from different service administration programs (4) do not interfere during administration of said local services (14, 16).

14. A computer program product for externally administrating local, Windows-based services (14, 16), with at least two centrally installed service administration programs (4), wherein the Windows-based services (14, 16) comprise Word for Windows Integrator (14), WWI, Ehsstart.exe and EXPERT (16) services, the computer program product comprising a computer program with instructions operable to cause a processor to:
install said local services (14, 16) on one or more computers (20a, 20b);
administrate said local services (14, 16) locally with a service management program (12) installed on said computers (20a, 20b), respectively;
send administration information to each service administration program (4) and receive administration information from said service management program (12) to administrate said local services (14, 16), respectively;
provide, through each service administration program (4), a single graphical user interface to administrate said local services (14, 16) through said service management program (12), respectively;
sending configuration parameter messages comprising configuration parameters of said local services (14, 16) to each service administration program (4), and presenting said configuration parameters through said single graphical user interface, respectively;
storing with each service administration program (4), said configuration parameters and enabling editing said local services (14, 16) with said configuration parameters through said single graphical user interface, respectively;
sending edited configuration parameters from each service administration program (4) to said service management program (12) to administrate the locally running services, respectively; and
providing, with said service management program (12), a list of local services (14, 16) installed on said local computers (20a, 20b) to each service administration program (4) and administering said local services (14, 16) through said single graphical user interface, respectively;
wherein each service administration program (4) communicates with said service management program (12) by transmitting remote function call messages through a single communication gateway (10);
running said service management program (12) in multiple threads, each thread communicating with a different service administration program (4) through said remote function calls;
wherein for each service administration program (4) an identifier is stored within the computer running the service management program (12), said identifier comprising service administration program (4) destinations retrieved by remote function call parameters from each service administration program (4), and said service management program (12) creating for each service administration program (4) a new thread, respectively;
wherein said service management threads are synchronized so that messages from different service administration programs (4) do not interfere during administration of said local services (14, 16).

15. A display for external administration of local, Windows-based services (14, 16), wherein the Windows-based services (14, 16) comprise Word for Windows Integrator (14), WWI, Ehsstart.exe and EXPERT (16) services, through at least two centrally installed service administration programs (4), the display showing administration information to administrate local services (14, 16) through service management programs (12) installed on one or more local computers (20a, 20b), each service administration program (4) communicating administration information with said service management program (12) to administrate said local services (14, 16), respectively,
where configuration parameter messages comprising configuration parameters of said local services (14, 16) are sent to each service administration program (4), and said configuration parameters are presented through a corresponding single graphical user interface, respectively;
where each service administration program (4) stores said configuration parameters and enables editing said local services (14, 16) with said configuration parameters through said single graphical user interface, respectively; and
where, with said service management program (12), a list of local services (14, 16) installed on said local computers (20a, 20b) is provided to each service administration program (4) and said local services (14, 16) are administered through said single graphical user interface, respectively;
wherein each service administration program (4) communicates with said service management program (12) by transmitting remote function call messages through a single communication gateway (10);
running said service management program (12) in multiple threads, each thread communicating with a different service administration program (4) through said remote function calls;
wherein for each service administration program (4) an identifier is stored within the computer running the service management program (12), said identifier comprising service administration program (4) destinations retrieved by remote function call parameters from each service administration program (4), and said service management program (12) creating for each service administration program (4) a new thread, respectively;
wherein said service management threads are synchronized so that messages from different service administration programs (4) do not interfere during administration of said local services (14, 16).

## Patentansprüche

1. Ein Verfahren zur externen Administration von lokalen, Windows-basierten Diensten (14, 16), mit mindestens zwei, zentral installierten Dienstadministrations-Programmen (4), wobei die genannten lokalen Dienste (14, 16) auf einem oder mehreren Computern (20a, 20b) installiert sind, wobei die Windows-basierte Dienste (14, 16) *Word for Windows Integrator* (14), *WWI, Ehsstart.exe* und *EXPERT* (16) Dienste umfassen, wobei das Verfahren Folgendes umfasst:
installieren eines Dienstmanagement-Programms (12), das die genannten lokalen Dienste (14, 16) auf den genannten Computern (20a, 20b) jeweils lokal administriert;
senden von Administrationsinformation ausgehend von jedem Dienstadministrations-Programm (4) an das genannte Dienstmanagement-Programm (12) und empfangen von Administrationsinformation in jedem Dienstadministrations-Programm (4) ausgehend vom genannten Dienstmanagement-Programm (12), um die genannten lokalen Dienste (14, 16) jeweils zu administrieren;
bereitstellen, durch jedes Dienstadministrations-Programm (4), einer einzelnen grafischen Anwenderschnittstelle, um die genannten lokalen Dienste (14, 16) durch das genannte Dienstmanagement-Programm (12) jeweils zu administrieren;
senden, mit dem genannten Dienstmanagement-Programm (12), von Konfigurationsparameter der genannten lokalen Dienste (14, 16) umfassenden Dienstkonfigurationsparameter-Nachrichten an jedes Dienstadministrations-Programm (4), und präsentieren der genannten, jeweiligen Konfigurationsparameter durch die genannte einzelne grafische Anwenderschnittstelle;
speichern der genannten Konfigurationsparameter mit jedem Dienstadministrations-Programm (4) und freigeben der Bearbeitung durch die genannte einzelne grafische Anwenderschnittstelle der jeweiligen genannten Konfigurationsparameter der genannten lokalen Dienste (14, 16);
senden der bearbeiteten Konfigurationsparameter von jedem Dienstadministrations-Programm (4) an das genannte Dienstmanagement-Programm (12), um die jeweils lokal laufenden Dienste zu administrieren; und
bereitstellen, mit dem genannten Dienstmanagement-Programm (12), einer Liste von lokalen Diensten (14, 16), die auf den genannten lokalen Computern (20a, 20b) installiert sind, für jedes Dienstadministrations-Programm (4), und administrieren der genannten lokalen Dienste (14, 16) jeweils durch die genannte einzelne grafische Anwenderschnittstelle;
wobei jedes Dienstadministrations-Programm (4) mit dem genannten Dienstmanagement-Programm (12) kommuniziert, indem *Remote Function Call-*Nachrichten durch einen einzelnen Kommunikations-Gateway (10) übertragen werden;
ausführen des genannten Dienstmanagement-Programms (12) in mehreren *Threads,* wobei jeder *Thread* mit einem unterschiedlichen Dienstadministrations-Programm (4) über die genannten *Remote Function Calls* kommuniziert;
wobei für jedes Dienstadministrations-Programm (4) ein Identifikator innerhalb des Computers gespeichert wird, der das Dienstmanagement-Programm (12) ausführt, wobei der genannte Identifikator Dienstadministrations-Programm (4)-Destinationen umfasst, die durch *Remote Function Call -* Parameter von jedem Dienstadministrations-Programm (4) abgerufen werden, und wobei das genannte Dienstmanagement-Programm (12) für jedes Dienstadministrations-Programm (4) jeweils einen neuen *Thread* erzeugt;
wobei die genannten Dienstmanagement-Threads derart synchronisiert werden, dass Nachrichten von unterschiedlichen Dienstadministrations-Programmen (4) sich während der Administration der genannten lokalen Dienste (14, 16) nicht gegenseitig stören.

2. Das Verfahren nach Anspruch 1, wobei das genannte Dienstmanagement-Programm (12) sich am genannten Kommunikations-Gateway (10) unter Verwendung einer Programm-ID anmeldet, und wobei das genannte Dienstmanagement-Programm (12) innerhalb der genannten einzelnen grafischen Anwenderschnittstelle und innerhalb von jedem Dienstadministrations-Programm (4) jeweils unter Verwendung der genannten Programm-ID identifiziert wird.

3. Das Verfahren nach Anspruch 1 oder 2, wobei das genannte einzelne Kommunikations-Gateway (10) eine Kommunikation mit dem genannten Dienstmanagement-Programm (12) für jedes Dienstadministrations-Programm (4) bereitstellt, das mit dem genannten Kommunikations-*Gateway* (10) verbunden ist.

4. Das Verfahren nach einem der Ansprüche von 1 bis 3, wobei das genannte einzelne Kommunikations-Gateway (10) Zugang jeweils zu einer Vielzahl an Dienstmanagement-Programmen (12) verschafft, ausgehend jeweils von jedem Dienstadministrations-Programm (4) und von der genannten grafischen Anwenderschnittstelle.

5. Das Verfahren nach einem der Ansprüche von 1 bis 4, das des Weiteren umfasst, mit jedem Dienstadministrations-Programm (4) Nachrichten an das genannte Dienstmanagement-Programm (12) zu senden, um die genannten lokalen Dienste (14, 16) lokal zu installieren und/oder zu deinstallieren.

6. Das Verfahren nach einem der Ansprüche von 1 bis 5, das des Weiteren umfasst, mit jedem Dienstadministrations-Programm (4) Nachrichten an das genannte Dienstmanagement-Programm (12) zu senden, um die genannten lokalen Dienste (14, 16) lokal zu starten und/oder zu stoppen.

7. Das Verfahren nach einem der Ansprüche von 1 bis 6, das des Weiteren umfasst, mit dem genannten Dienstmanagement-Programm (12) *Service Control*-Informationen der genannten lokalen Dienste (14, 16) umfassende *Service Confrol*-Nachrichten an jedes Dienstadministrations-Programm (4) zu senden, und die *Service Control*-Informationen mit jedem Dienstadministrations-Programm (4) durch die genannte einzelne grafische Anwenderschnittstelle jeweils zu präsentieren.

8. Das Verfahren nach Anspruch 7, das des Weiteren umfasst, die genannten *Service Control*-Informationen in eine Vielzahl von Kategorien aufzuteilen, die zumindest diejenige einer Servicestatus-Information, einer Servicewarnung-Information, und einer Servicefehler-Information, und die genannten *Service Control-*Informationen durch jede einzelne grafische Anwenderschnittstelle entsprechend der jeweiligen Kategorie auf unterschiedliche Weise zu präsentieren.

9. Das Verfahren nach einem der Ansprüche von 1 bis 8, das des Weiteren umfasst, mit dem genannten Dienstmanagement-Programm (12), Service-Statistiken betreffende Nachrichten, die Statistiken zu den genannten lokalen Diensten (14, 16) umfassen, an jedes Dienstadministrations-Programm (4) zu senden, und die genannten Statistiken durch die genannte einzelne grafische Anwenderschnittstelle jeweils zu präsentieren.

10. Das Verfahren nach Anspruch 9, wobei die genannten Statistiken Informationen umfassen, die Folgendes betreffen: mindestens einen aus einer Vielzahl an Zugängen zu den genannten lokalen Diensten (14, 16), die Betriebszeiten der genannten lokalen Dienste (14, 16), und die Leerlaufzeiten der genannten lokalen Dienste (14, 16).

11. Das Verfahren nach einem der Ansprüche von 1 bis 10, das des Weiteren umfasst, das genannte Dienstmanagement-Programm (12) mit lokalen Administrationsrechten zur lokalen Dienst-Administration bereitzustellen.

12. Das Verfahren nach einem der Ansprüche von 1 bis 11, das des Weiteren umfasst, während der lokalen Installation des genannten Dienstmanagement-Programms (12), einen lokalen *Operation Account* für das genannte Dienstmanagement-Programm (12) zu erlangen, wobei der genannte lokale *Operating Account* mit Administrationsrechten zur lokalen Dienst-Administration bereitgestellt wird.

13. Ein Computersystem, das mindestens zwei zentrale Administrations-Computer (2) und einen lokalen Service-Computer (20a, 20b) umfasst, die Windows-basierten Dienste (14, 16) lokal betreiben, wobei die Windows-basierte Dienste (14, 16) *Word for Windows Integrator* (14), *WWI, Ehsstart.exe* und *EXPERT* (16) Dienste umfassen,
wobei die genannten lokalen Computer (20a, 20b) Mittel zum Servicebetrieb umfassen, um die genannten lokalen Dienste (14, 16) zu betreiben, Mittel zum Servicemanagement, um ein Dienstmanagement-Programm (12) zu betreiben, um die genannten lokalen Dienste (14, 16) lokal zu administrieren, und Mittel zur Kommunikation, um Administrations-Informationen an jeden zentralen Administrations-Computer (2) zu senden,
wobei jeder Administrations-Computer (2) Mittel zur Service-Administration umfasst, um ein Dienstadministrations-Programm (4) zu betreiben, und Mittel zur Kommunikation, um die Administrations-Informationen mit dem genannten Mittel zur Dienstadministration zu kommunizieren, um die genannten lokalen Dienste (14, 16) zu administrieren,
wobei jeder zentrale Administrations-Computer (2) des Weiteren AnzeigeMittel umfasst, zur Anzeige einer einzelnen grafischen Anwenderschnittstelle, um die genannten lokalen Dienste (14, 16) durch das genannte Mittel zum Servicemanagement lokal zu administrieren;
senden mit jedem Dienstadministrations-Programm (4) von Konfigurationsparameter der genannten lokalen Dienste (14, 16) umfassenden Dienstkonfigurationsparameter-Nachrichten an jedes Dienstadministrations-Programm (4), und präsentieren der genannten, jeweiligen Konfigurationsparameter durch die genannte einzelne grafische Anwenderschnittstelle;
speichern mit jedem Dienstadministrations-Programm (4) der genannten Konfigurationsparameter und jeweils freigeben der Bearbeitung der genannten lokalen Dienste (14, 16) mit den genannten Konfigurationsparametern durch die genannte einzelne grafische Anwenderschnittstelle;
senden der bearbeiteten Konfigurationsparameter von jedem Dienstadministrations-Programm (4) an das genannte Dienstmanagement-Programm (12), um die jeweils lokal laufenden Dienste zu administrieren; und
bereitstellen, mit dem genannten Dienstmanagement-Programm (12), einer Liste von lokalen Diensten (14, 16), die auf den genannten lokalen Computern (20a, 20b) installiert sind, für jedes Dienstadministrations-Programm (4), und administrieren der genannten lokalen Dienste (14, 16) jeweils durch die genannte einzelne grafische Anwenderschnittstelle;
wobei jedes Dienstadministrations-Programm (4) mit dem genannten Dienstmanagement-Programm (12) kommuniziert, indem *Remote Function Call-*Nachrichten durch einen einzelnen Kommunikations-Gateway (10) übertragen werden;
ausführen des genannten Dienstmanagement-Programms (12) in mehreren *Threads,* wobei jeder *Thread* mit einem unterschiedlichen Dienstadministrations-Programm (4) über die genannten *Remote Function Calls* kommuniziert;
wobei für jedes Dienstadministrations-Programm (4) ein Identifikator innerhalb des Computers gespeichert wird, der das Dienstmanagement-Programm (12) ausführt, wobei der genannte Identifikator Dienstadministrations-Programm (4)-Destinationen umfasst, die durch *Remote Function Call -* Parameter von jedem Dienstadministrations-Programm (4) abgerufen werden, und wobei das genannte Dienstmanagement-Programm (12) für jedes Dienstadministrations-Programm (4) jeweils einen neuen *Thread* erzeugt;
wobei die genannten Dienstmanagement-Threads derart synchronisiert werden, dass Nachrichten von unterschiedlichen Dienstadministrations-Programmen (4) sich während der Administration der genannten lokalen Dienste (14, 16) nicht gegenseitig stören.

14. Ein Computerprogrammprodukt zur externen Administration von lokalen, Windows-basierten Diensten (14, 16), mit mindestens zwei, zentral installierten Dienstadministrations-Programmen (4), wobei die Windows-basierte Dienste (14, 16) *Word for Windows- Integrator* (14), *WWI, Ehsstart.exe* und *EXPERT* (16) Dienste umfassen, wobei das Computerprogrammprodukt ein Computerprogramm mit Anweisungen umfasst, die dazu betriebsbereit sind einen Prozessor zu Folgendem zu veranlassen:
installieren der genannten lokalen Dienste (14, 16) auf einem oder mehreren Computern (20a, 20b);
administrieren der genannten lokalen Dienste (14, 16) lokal mit einem Dienstmanagement-Programm (12), das jeweils auf den genannten Computern (20a, 20b) installiert ist;
senden von Administrationsinformation an jedes Dienstadministrations-Programm (4) und empfangen von Administrationsinformation vom genannten Dienstmanagement-Programm (12), um die genannten lokalen Dienste (14, 16) jeweils zu administrieren;
bereitstellen, durch jedes Dienstadministrations-Programm (4), einer einzelnen grafischen Anwenderschnittstelle, um die genannten lokalen Dienste (14, 16) durch das genannte Dienstmanagement-Programm (12) jeweils zu administrieren;
senden von Konfigurationsparameter der genannten lokalen Dienste (14, 16) umfassenden Dienstkonfigurationsparameter-Nachrichten an jedes Dienstadministrations-Programm (4), und präsentieren der genannten, jeweiligen Konfigurationsparameter durch die genannte einzelne grafische Anwenderschnittstelle;
speichern der genannten Konfigurationsparameter mit jedem Dienstadministrations-Programm (4) und freigeben der jeweiligen Bearbeitung durch die genannte einzelne grafische Anwenderschnittstelle der genannten lokalen Dienste (14, 16) mit den genannten Konfigurationsparametern;
senden der bearbeiteten Konfigurationsparameter von jedem Dienstadministrations-Programm (4) an das genannte Dienstmanagement-Programm (12), um die jeweils lokal laufenden Dienste zu administrieren; und
bereitstellen, mit dem genannten Dienstmanagement-Programm (12), einer Liste von lokalen Diensten (14, 16), die auf den genannten lokalen Computern (20a, 20b) installiert sind, für jedes Dienstadministrations-Programm (4), und administrieren der genannten lokalen Dienste (14, 16) jeweils durch die genannte einzelne grafische Anwenderschnittstelle;
wobei jedes Dienstadministrations-Programm (4) mit dem genannten Dienstmanagement-Programm (12) kommuniziert, indem *Remote Function Call* Nachrichten durch einen einzelnen Kommunikations-*Gateway* (10) übertragen werden;
ausführen des genannten Dienstmanagement-Programms (12) in mehreren *Threads,* wobei jeder *Thread* mit einem unterschiedlichen Dienstadministrations-Programm (4) über die genannten *Remote Function Calls* kommuniziert;
wobei für jedes Dienstadministrations-Programm (4) ein Identifikator innerhalb des Computers gespeichert wird, der das Dienstmanagement-Programm (12) ausführt, wobei der genannte Identifikator Dienstadministrations-Programm (4)-Destinationen umfasst, die durch *Remote Function Call -* Parameter von jedem Dienstadministrations-Programm (4) abgerufen werden, und wobei das genannte Dienstmanagement-Programm (12) für jedes Dienstadministrations-Programm (4) jeweils einen neuen *Thread* erzeugt;
wobei die genannten Dienstmanagement-*Threads* derart synchronisiert werden, dass Nachrichten von unterschiedlichen Dienstadministrations-Programmen (4) sich während der Administration der genannten lokalen Dienste (14, 16) nicht gegenseitig stören.

15. Eine Anzeige zur externen Administration von lokalen, Windows-basierten Diensten (14, 16), wobei die Windows-basierte Dienste (14, 16) *Word for Windows Integrator* (14), *WWI, Ehsstart.exe* und *EXPERT* (16) Dienste umfassen, durch mindestens zwei zentral installierte Dienstadministrations-Programme (4), wobei die Anzeige Administrationsinformationen anzeigt, um lokale Dienste (14, 16) durch ein Dienstmanagement-Programm (12) zu administrieren, das auf einem oder mehreren Computern (20a, 20b) installiert ist, wobei jedes Dienstadministrations-Programm (4) Administrationsinformationen mit dem genannten Dienstmanagement-Programm (12) kommuniziert, um die genannten lokalen Dienste (14, 16) jeweils zu administrieren;
wobei Konfigurationsparameter der genannten lokalen Dienste (14, 16) umfassende Dienstkonfigurationsparameter-Nachrichten an jedes Dienstadministrations-Programm (4) gesendet werden, und die genannten Konfigurationsparameter jeweils durch eine entsprechende einzelne grafische Anwenderschnittstelle präsentiert werden;
wobei jedes Dienstadministrations-Programm (4) die genannten Konfigurationsparameter speichert und die Bearbeitung der genannten lokalen Dienste (14, 16) mit den genannten Konfigurationsparametern durch die genannte einzelne grafische Anwenderschnittstelle freigibt; und
wobei, mit dem genannten Dienstmanagement-Programm (12), eine Liste von lokalen Diensten (14, 16), die auf den genannten lokalen Computern (20a, 20b) installiert sind, für jedes Dienstadministrations-Programm (4) bereitgestellt wird, und die genannten lokalen Dienste (14, 16) jeweils durch die genannte einzelne grafische Anwenderschnittstelle administriert werden;
wobei jedes Dienstadministrations-Programm (4) mit dem genannten Dienstmanagement-Programm (12) kommuniziert, indem *Remote Function Call-*Nachrichten durch einen einzelnen Kommunikations-*Gateway* (10) übertragen werden;
ausführen des genannten Dienstmanagement-Programms (12) in mehreren *Threads*, wobei jeder *Thread* mit einem unterschiedlichen Dienstadministrations-Programm (4) über die genannten *Remote Function Calls* kommuniziert;
wobei für jedes Dienstadministrations-Programm (4) ein Identifikator innerhalb des Computers gespeichert wird, der das Dienstmanagement-Programm (12) ausführt, wobei der genannte Identifikator Dienstadministrations-Programm (4)-Destinationen umfasst, die durch *Remote Function Call -* Parameter von jedem Dienstadministrations-Programm (4) abgerufen werden, und wobei das genannte Dienstmanagement-Programm (12) für jedes Dienstadministrations-Programm (4) jeweils einen neuen *Thread* erzeugt;
wobei die genannten Dienstmanagement-Threads derart synchronisiert werden, dass Nachrichten von unterschiedlichen Dienstadministrations-Programmen (4) sich während der Administration der genannten lokalen Dienste (14, 16) nicht gegenseitig stören.

## Revendications

1. Un procédé pour administrer de l'extérieur des services (14, 16) locaux basées sur Windows avec au moins deux programmes (4) d'administration de service installés de manière centrale, lesdits services locaux (14, 16) étant installés sur un ou plusieurs ordinateurs (20a, 20b), sachant que les services (14, 16) basées sur Windows comprennent des services *Word for Windows Integrator* (14), *WWI, Ehsstart.exe* et *EXPERT* (16), le procédé comprenant le fait de :
installer un programme (12) de gestion de service qui administre localement lesdits services locaux (14, 16) respectivement sur lesdits ordinateurs (20a, 20b) ;
envoyer à partir de chaque programme (4) d'administration de service de l'information d'administration au programme (12) de gestion de service nommé, et recevoir dans chaque programme (4) d'administration de service de l'information d'administration à partir dudit programme (12) de gestion de service afin d'administrer respectivement lesdits services locaux (14, 16) ;
fournir, par chaque programme (4) d'administration de service, une interface graphique d'utilisateur individuelle pour administrer respectivement lesdits services locaux (14, 16) au moyen dudit programme (12) de gestion de service ;
envoyer, avec ledit programme (12) de gestion de service, des messages de paramètres de configuration de service, comprenant des paramètres de configuration desdits services locaux (14, 16), à chaque programme (4) d'administration de service, et présenter lesdits paramètres de configuration respectivement au moyen de ladite interface graphique d'utilisateur individuelle ;
stocker lesdits paramètres de configuration avec chaque programme (4) d'administration de service et permettre l'édition desdits paramètres de configuration desdits services locaux (14, 16) respectivement au moyen de ladite interface graphique d'utilisateur individuelle ;
envoyer les paramètres de configuration édités à partir de chaque programme (4) d'administration de service au programme (12) de gestion de service nommé pour administrer respectivement des services exécutés localement ; et
fournir, avec ledit programme (12) de gestion de service, une liste de services locaux (14, 16) installés sur lesdits ordinateurs (20a, 20b) à chaque programme (4) d'administration de service, et administrer lesdits services locaux (14, 16) respectivement au moyen de ladite interface graphique d'utilisateur individuelle ;
sachant que chaque programme (4) d'administration de service communique avec ledit programme (12) de gestion de service en transmettant des messages d'appels de fonction a distance *(remote function calls*) à travers une seule passerelle de communication (10) ;
exécuter ledit programme (12) de gestion de service en multiples unités d'exécution, chaque unité d'exécution communicant avec un différent programme (4) d'administration de service au moyen desdits appels de fonction a distance ;
sachant que pour chaque programme (4) d'administration de service un identificateur est stocké à l'intérieur de l'ordinateur exécutant le programme (12) de gestion de service, ledit identificateur comprenant des destinations de programme (4) d'administration de service récupérées par des paramètres d'appels de fonction a distance à partir de chaque programme (4) d'administration de service, et ledit programme (12) de gestion de service créant pour chaque programme (4) d'administration de service respectivement une nouvelle unité d'exécution ;
sachant que lesdites unités d'exécution de gestion de service sont synchronisées de manière que des messages en provenance de différents programmes (4) d'administration de service n'interfèrent pas pendant l'administration desdits services locaux (14, 16).

2. Le procédé d'après la revendication 1, sachant que ledit programme (12) de gestion de service s'inscrit auprès de ladite passerelle de communication (10) en utilisant un ID de programme et que ledit programme (12) de gestion de service est identifié à l'intérieur dudit affichage graphique individuel et que chaque programme (4) d'administration de service utilise respectivement ledit ID de programme.

3. Le procédé d'après la revendication 1 ou 2, sachant que ladite seule passerelle de communication (10) assure la communication avec ledit programme (12) de gestion de service pour chaque programme (4) d'administration de service connecté avec ladite passerelle de communication (10).

4. Le procédé d'après une des revendications de 1 à 3, sachant que ladite seule passerelle de communication (10) donne accès respectivement à une pluralité de programmes (12) de gestion de service respectivement à partir de chaque programme (4) d'administration de service et de ladite interface graphique d'utilisateur.

5. Le procédé d'après une des revendications de 1 à 4, comprenant en outre le fait d'envoyer, avec chaque programme (4) d'administration de service, des messages au programme (12) de gestion de service nommé pour installer et/ou désinstaller localement lesdits services locaux (14, 16).

6. Le procédé d'après une des revendications de 1 à 5, comprenant en outre le fait d'envoyer, avec chaque programme (4) d'administration de service, des messages au programme (12) de gestion de service nommé pour démarrer et/ou arrêter localement lesdits services locaux (14, 16).

7. Le procédé d'après une des revendications de 1 à 6, comprenant en outre le fait d'envoyer, avec ledit programme (12) de gestion de service, des messages de commande de service comprenant de l'information de commande de service desdits services locaux (14, 16) à chaque programme (4) d'administration de service, et de présenter, avec chaque programme (4) d'administration de service, ladite information de commande de service respectivement au moyen de ladite interface graphique d'utilisateur individuelle.

8. Le procédé d'après la revendication 7, comprenant en outre le fait de répartir ladite information de commande de service en une pluralité de catégories, incluant au moins une information d'état de service, une information d'avertissement de service et une information d'erreur de service, et de présenter ladite information de commande de service au moyen de chaque interface graphique d'utilisateur individuelle de manière différente, selon sa catégorie.

9. Le procédé d'après une des revendications de 1 à 8, comprenant en outre le fait d'envoyer, avec ledit programme (12) de gestion de service, des messages des statistiques de services, comprenant des statistiques desdits services locaux (14, 16), à chaque programme (4) d'administration de service, et de présenter lesdites statistiques respectivement au moyen de ladite interface graphique d'utilisateur individuelle.

10. Le procédé d'après la revendication 9, sachant que lesdites statistiques comprennent une information concernant au moins un parmi les suivants : un nombre d'accès aux services locaux (14, 16) nommés, les heures de fonctionnement desdits services locaux (14, 16) et les temps d'inactivité desdits services locaux (14, 16).

11. Le procédé d'après une des revendications de 1 à 10, comprenant en outre le fait de pourvoir ledit programme (12) de gestion de service avec des droits d'administration locale pour une administration locale des services.

12. Le procédé d'après une des revendications de 1 à 11, comprenant en outre le fait d'acquérir, pendant l'installation locale dudit programme (12) de gestion de service, un compte d'opération locale dudit programme (12) de gestion de service, ledit compte d'opération locale étant pourvu de droits d'administration pour une administration locale des services.

13. Un système informatique, comprenant au moins deux ordinateurs centraux (2) d'administration et un ordinateur (20a, 20b) local de service offrant localement des services (14, 16) basées sur Windows, sachant que les services (14, 16) basées sur Windows comprennent des services *Word for Windows Integrator* (14), *WWI, Ehsstart.exe* et *EXPERT* (16),
ledit ordinateur (20a, 20b) local comprenant des moyens d'opération de service pour faire fonctionner lesdits services locaux (14, 16), des moyens de gestion de service pour faire fonctionner un programme (12) de gestion de service afin d'administrer localement lesdits services locaux (14, 16), et des moyens de communication pour envoyer des informations d'administration à chaque ordinateur (2) d'administration centrale,
chaque ordinateur central (2) d'administration comprenant des moyens d'administration de service pour faire fonctionner un programme (4) d'administration de service et des moyens de communication pour communiquer les informations d'administration avec lesdits moyens d'administration de service, pour administrer lesdits services locaux (14, 16),
chaque ordinateur central (2) d'administration comprenant en outre des moyens d'affichage pour afficher une interface graphique d'utilisateur individuelle pour administrer localement lesdits services locaux (14, 16) au moyen desdits moyens de gestion de service ;
envoyer, avec chaque programme (4) d'administration de service, des messages de paramètres de configuration de service, comprenant des paramètres de configuration desdits services locaux (14, 16), à chaque programme (4) d'administration de service, et présenter lesdits paramètres de configuration respectivement au moyen de ladite interface graphique d'utilisateur individuelle ;
stocker lesdits paramètres de configuration avec chaque programme (4) d'administration de service, et permettre l'édition desdits services locaux (14, 16) avec les paramètres de configuration respectivement au moyen de ladite interface graphique d'utilisateur individuelle ;
envoyer les paramètres de configuration édités à partir de chaque programme (4) d'administration de service au programme (12) de gestion de service nommé pour administrer respectivement des services exécutés localement ; et
fournir, avec ledit programme (12) de gestion de service, une liste de services locaux (14, 16) installés sur lesdits ordinateurs (20a, 20b) à chaque programme (4) d'administration de service, et administrer lesdits services locaux (14, 16) respectivement au moyen de ladite interface graphique d'utilisateur individuelle ;
sachant que chaque programme (4) d'administration de service communique avec ledit programme (12) de gestion de service en transmettant des messages d'appels de fonction a distance *(remote function calls*) à travers une seule passerelle de communication (10) ;
exécuter ledit programme (12) de gestion de service en multiples unités d'exécution, chaque unité d'exécution communicant avec un différent programme (4) d'administration de service au moyen desdits appels de fonction a distance ;
sachant que pour chaque programme (4) d'administration de service un identificateur est stocké à l'intérieur de l'ordinateur exécutant le programme (12) de gestion de service, ledit identificateur comprenant des destinations de programme (4) d'administration de service récupérées par des paramètres d'appels de fonction a distance à partir de chaque programme (4) d'administration de service, et ledit programme (12) de gestion de service créant pour chaque programme (4) d'administration de service respectivement une nouvelle unité d'exécution ;
sachant que lesdites unités d'exécution de gestion de service sont synchronisées de manière que des messages en provenance de différents programmes (4) d'administration de service n'interfèrent pas pendant l'administration desdits services locaux (14, 16).

14. Un produit programme informatique pour administrer de l'extérieur des services (14, 16) locaux basées sur Windows avec au moins deux programmes (4) d'administration de service installés de manière centrale, sachant que les services (14, 16) basées sur Windows comprennent des services *Word for Windows Integrator* (14), *WWI, Ehsstart.exe* et *EXPERT* (16), le produit programme informatique comprenant un programme informatique avec des instructions, pouvant être mis en oeuvre pour amener un processeur à :
installer lesdits services locaux (14, 16) sur un ou plusieurs ordinateurs (20a, 20b) ;
administrer lesdits services locaux (14, 16) localement avec un programme (12) de gestion de service installé respectivement sur lesdits ordinateurs (20a, 20b) ;
envoyer de l'information d'administration à chaque programme (4) d'administration et recevoir de l'information d'administration dudit programme (12) de gestion de service afin d'administrer respectivement lesdits services locaux (14, 16) ;
fournir, au moyen de chaque programme (4) d'administration de service, une interface graphique d'utilisateur individuelle, pour administrer respectivement lesdits services locaux (14, 16) au moyen dudit programme (12) de gestion de service ;
envoyer des messages de paramètres de configuration, comprenant des paramètres de configuration desdits services locaux (14, 16), à chaque programme (4) d'administration de service, et présenter lesdits paramètres de configuration respectivement au moyen de ladite interface graphique d'utilisateur individuelle ;
stocker lesdits paramètres de configuration avec chaque programme (4) d'administration de service, et permettre l'édition desdits services locaux (14, 16) avec les paramètres de configuration respectivement au moyen de ladite interface graphique d'utilisateur individuelle ;
envoyer les paramètres de configuration édités à partir de chaque programme (4) d'administration de service au programme (12) de gestion de service nommé pour administrer respectivement des services exécutés localement ; et
fournir, avec ledit programme (12) de gestion de service, une liste de services locaux (14, 16) installés sur lesdits ordinateurs locaux (20a, 20b) à chaque programme (4) d'administration de service, et administrer lesdits services locaux (14, 16) respectivement au moyen de ladite interface graphique d'utilisateur individuelle ;
sachant que chaque programme (4) d'administration de service communique avec ledit programme (12) de gestion de service en transmettant des messages d'appels de fonction a distance *(remote function calls*) à travers une seule passerelle de communication (10) ;
exécuter ledit programme (12) de gestion de service en multiples unités d'exécution, chaque unité d'exécution communicant avec un différent programme (4) d'administration de service au moyen desdits appels de fonction a distance ;
sachant que pour chaque programme (4) d'administration de service un identificateur est stocké à l'intérieur de l'ordinateur exécutant le programme (12) de gestion de service, ledit identificateur comprenant des destinations de programme (4) d'administration de service récupérées par des paramètres d'appels de fonction a distance à partir de chaque programme (4) d'administration de service, et ledit programme (12) de gestion de service créant pour chaque programme (4) d'administration de service respectivement une nouvelle unité d'exécution ;
sachant que lesdites unités d'exécution de gestion de service sont synchronisées de manière que des messages en provenance de différents programmes (4) d'administration de service n'interfèrent pas pendant l'administration desdits services locaux (14, 16).

15. Un affichage pour administrer de l'extérieur des services (14, 16) locaux basées sur Windows, sachant que les services (14, 16) basées sur Windows comprennent des services *Word for Windows Integrator* (14), *WWI, Ehsstart.exe* et *EXPERT* (16), au moyen d'au moins deux programmes (4) d'administration de service installés de manière centrale, l'affichage montrant des informations d'administration pour administrer des services locaux (14, 16) au moyen de programmes (12) de gestion de service installés sur un ou plusieurs ordinateurs (20a, 20b), chaque programme (4) d'administration de service communiquant des informations d'administration avec ledit programme (12) de gestion de service afin d'administrer respectivement lesdits services locaux (14, 16) ;
sachant que des messages de paramètres de configuration, comprenant des paramètres de configuration desdits services locaux (14, 16), sont envoyés à chaque programme (4) d'administration de service, et que lesdits paramètres de configuration sont présentés respectivement au moyen d'une correspondante interface graphique d'utilisateur individuelle ;
sachant que chaque programme (4) d'administration de service stocke lesdits paramètres de configuration et permet l'édition desdits services locaux (14, 16) avec les paramètres de configuration respectivement au moyen de ladite interface graphique d'utilisateur individuelle ; et
sachant qu'avec ledit programme (12) de gestion de service une liste de services locaux (14, 16) installés sur lesdits ordinateurs locaux (20a, 20b) est fournie à chaque programme (4) d'administration de service, et lesdits services locaux (14, 16) sont respectivement administrés au moyen de ladite interface graphique d'utilisateur individuelle ;
sachant que chaque programme (4) d'administration de service communique avec ledit programme (12) de gestion de service en transmettant des messages d'appels de fonction a distance *(remote function calls*) à travers une seule passerelle de communication (10) ;
exécuter ledit programme (12) de gestion de service en multiples unités d'exécution, chaque unité d'exécution communicant avec un différent programme (4) d'administration de service au moyen desdits appels de fonction a distance ;
sachant que pour chaque programme (4) d'administration de service un identificateur est stocké à l'intérieur de l'ordinateur exécutant le programme (12) de gestion de service, ledit identificateur comprenant des destinations de programme (4) d'administration de service récupérées par des paramètres d'appels de fonction a distance à partir de chaque programme (4) d'administration de service, et ledit programme (12) de gestion de service créant pour chaque programme (4) d'administration de service respectivement une nouvelle unité d'exécution ;
sachant que lesdites unités d'exécution de gestion de service sont synchronisées de manière que des messages en provenance de différents programmes (4) d'administration de service n'interfèrent pas pendant l'administration desdits services locaux (14, 16).
